Europäisches Patentamt

European Patent Office

Office européen des brevets

(19)

(11) **EP 1 224 607 B1**

(12) **EUROPÄISCHE PATENTSCHRIFT**

(45) Veröffentlichungstag und Bekanntmachung des Hinweises auf die Patenterteilung:
**11.08.2004 Patentblatt 2004/33**

(21) Anmeldenummer: **00967877.2**

(22) Anmeldetag: **16.10.2000**

(51) Int Cl.⁷: **G06K 7/00**, G06K 7/08

(86) Internationale Anmeldenummer:
**PCT/EP2000/010168**

(87) Internationale Veröffentlichungsnummer:
**WO 2001/029753 (26.04.2001 Gazette 2001/17)**

(54) **VERFAHREN ZUM AUSLESEN UND BESCHREIBEN VON RFID-TRANSPONDERN**

METHOD FOR SELECTING AND WRITING INTO RFID-TRANSPONDERS

PROCEDE DE LECTURE ET D'ECRITURE DE REPETEURS RFID

(84) Benannte Vertragsstaaten:
**AT BE CH CY DE DK ES FI FR GB GR IE IT LI LU MC NL PT SE**

(30) Priorität: **18.10.1999 DE 19950145**

(43) Veröffentlichungstag der Anmeldung:
**24.07.2002 Patentblatt 2002/30**

(73) Patentinhaber: **Lucatron AG**
**6341 Baar (CH)**

(72) Erfinder: **MÜLLER, Philipp**
**CH-8606 Greifensee (CH)**

(74) Vertreter: **König, Beate, Dipl.-Phys. Dr. et al**
**König & Köster,**
**Morassistrasse 8**
**80469 München (DE)**

(56) Entgegenhaltungen:
**EP-A- 0 316 963        US-A- 5 083 013**
**US-A- 5 726 630**

**Beschreibung**

Die vorliegende Erfindung betrifft ein Verfahren zum Auslesen und Beschreiben von RFID-Transpondern, mit induktiver Kopplung unter Verwendung einer Schreib-/Lese-Einheit, wobei die Transponder mit Resonanzfrequenz arbeiten. Weiter betrifft die Erfindung ein System zum Auslesen und Beschreiben von RFID-Transpondern, wobei das System einen auf einem Träger angeordneten Transponder mit einem Resonanzschwingkreis mit Resonanzfrequenz, eine Empfängereinrichtung und eine Schreib-/Lese-Einheit mit Sender/Empfänger umfaßt.

RFID-Systeme werden zunehmend häufiger zur berührungsfreien, automatischen Identifikation eingesetzt. Etwa 90 % aller verkauften RFID-Systeme sind heute induktiv gekoppelte Systeme mit induktiver Kopplung zwischen Lesegerät und Transponder. Derartige Systeme, sogenannte Remote-coupling-Systeme, arbeiten in der Regel mit Reichweiten von bis zu 1 m im Schreib-/Lesebetrieb.

Als Sendefrequenzen werden Frequenzen unter 135 kHz oder die Frequenzen 6,78 MHz, 13,56 MHz und 27,125 MHz verwendet, d.h. es werden die speziell für industrielle, wissenschaftliche oder medizinische Anwendungen freigehaltenen ISM-Frequenzbereiche benutzt. Je nach den verwendeten Frequenzen ergeben sich Unterschiede in den Datenübertragungsraten, Taktfrequenzen, Leistung, etc.

Zur Kennzeichnung von Waren und anderen Gegenständen können heute RFID-Etiketten verwendet werden, da diese inzwischen praktisch so dünn wie herkömmliche Klebeetiketten hergestellt werden können und so für den Benutzer in der Regel nicht als RFID-Etiketten zu erkennen sind. Beispielsweise können RFID-Etiketten in Bücher, Zeitschriften oder ähnliche Dokumente geklebt oder laminiert werden.

Im Radiofrequenzbereich (3 MHz bis 30 MHz) arbeitende RFID-Systeme arbeiten mit LC-Schwingkreisen mit einer Resonanzfrequenz $f_R$. Wirkt ein magnetisches Wechselfeld mit einer Frequenz $f_S$ auf den Transponder eines RFID-Etiketts, beginnt der Schwingkreis des Transponders, sich einzuschwingen, und wird zur Resonanzschwingung angeregt. Er nimmt dabei Energie aus dem magnetischen Wechselfeld auf, was beispielsweise durch Ansteigen des Spulenstroms oder den Spannungsabfall am Innenwiderstand im Senderkreis erfaßt werden kann. Auf diese Weise wird auch die Betriebsspannung für den Transponderchip erzeugt.

Bei EAS-Systemen, d.h. elektronischen Artikelsicherungen, wird mit gewobbelter Frequenz gearbeitet. Die Senderfrequenz überstreicht fortlaufend einen Frequenzbereich. Durch die bei einer nicht bekannten Resonanzfrequenz eines Transponders auftretende Energieabsorption kann dieser erkannt werden. In der DE 195 14 601 A1 ist ein solches EAS-System mit breitbandigem Vorverstärker beschrieben, das beispielsweise bei zwei Transpondertypen deren Frequenzbereiche nacheinander durchläuft.

Das Auftreten eines Spannungsabfalls im Senderkreis als Folge einer Schwingungsanregung des Empfängertransponders wird bei der Lastmodulation ausgenutzt, bei der mittels An- und Ausschalten des Lastwiderstandes des Transponders Spannungsänderungen an der Antenne des Senders und somit eine Amplitudenmodulation der Antennenspannung bewirkt wird.

Befinden sich zwei RFID-Etiketten in großer Nähe, etwa übereinander gestapelt in einer Dokumentenablage oder nebeneinander in einem Bücherregal, so beeinflussen sich diese gegenseitig beim Empfang, d.h. sie empfangen etwa mit gleicher Stärke ein gleichphasiges Signal vom Sender und es treten Kopplungseffekte auf. Liegen sie genau übereinander, liegt praktisch eine gemeinsame Spule vor, wobei die beiden Kondensatoren parallel geschaltet sind. Es kommt so zu einer Frequenzverschiebung, d.h. Änderung der Resonanzfrequenz. Dies führt dazu, daß das betreffende Lesegerät die Daten nur noch in eingeschränktem Umfang oder gar nicht mehr erfassen kann.

Versuche haben gezeigt, daß sich die Resonanzfrequenz eines RFID-Etiketts immer nach unten verschiebt, wenn ein zweites RFID-Etikett in den Kopplungsbereich des ersten gerät. Im Extremfall kann es zu einer starren Kopplung kommen, wobei die Resonanzfrequenz der beiden RFID-Etiketten dann $f_R/\sqrt{2}$ beträgt. Auch durch Einsatz hoher Feldstärken, d.h. hoher Senderleistung, ist nicht immer eine Kommunikation bei der Sendefrequenz $f_S$ möglich. Je nach Kopplungsgrad und Eigenfrequenz der Transponderkreise können oberhalb der nach unten verschobenen Resonanzfrequenz Nullstellen liegen. Liegt eine solche Nullstelle gerade bei der Sendefrequenz $f_S$, funktioniert der Chip nicht mehr.

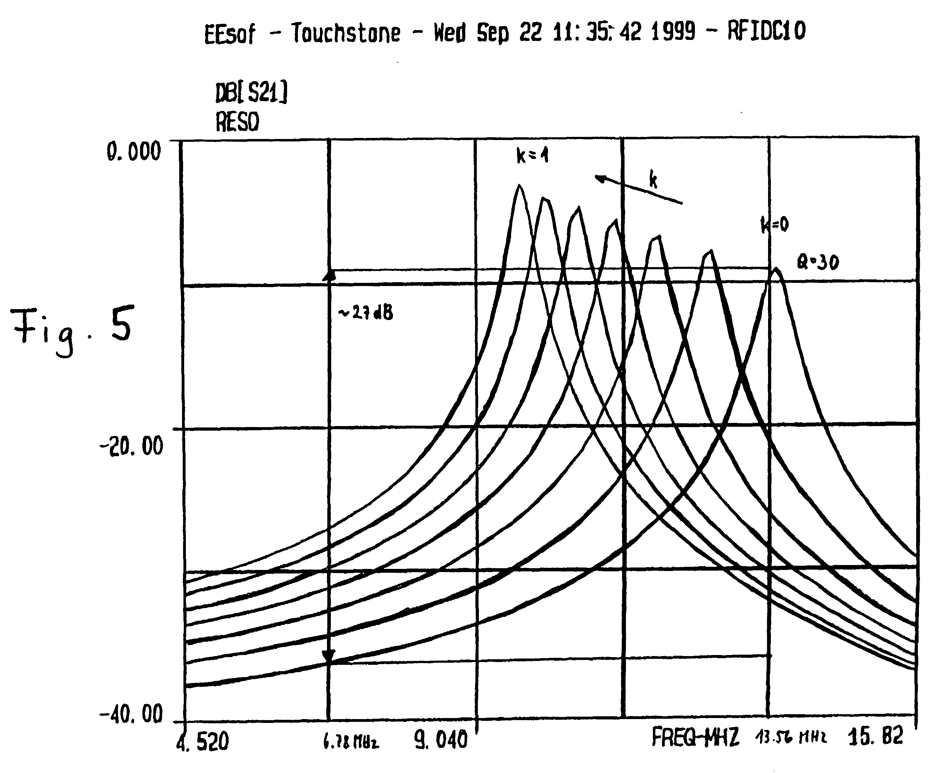

Dies ist anhand von Ersatzschaltbildern in Fig. 4 dargestellt. Im Senderzweig des Senders/Empfängers A befindet sich ein Oszillator 2 mit Frequenz $f_S$, dessen Ausgangssignal ggf. nach Modulation in eine Leistungsendstufe 4 gegeben wird. Im Empfangszweig, der unmittelbar bei der Antennenbuchse beginnt, sind ein Demodulator 6 und ein Bandpaßfilter 8 oder anderes Filter. Eine Spule 10 ist die Antenne mit Induktivität $L_S$. Weiter sind die Ersatzschaltbilder von zwei RFID-Etiketten a, b veranschaulicht. Diese umfassen jeweils eine Spule 12 mit Induktivität $L_1$ bzw. $L_2$ und eine Kapazität 14 parallel zum Transponderchip 16. Die Kopplungsverhältnisse sind durch Linien veranschaulicht, wobei $k_s$ die Kopplung Sender/Empfänger-Transponder und k die Kopplung zwischen den beiden Transpondern darstellt. Gibt es Unterschiede in Größe (und somit Kopplung) oder Frequenz der RFID-Etiketten, kommt es zu den erwähnten Auslöschungen.

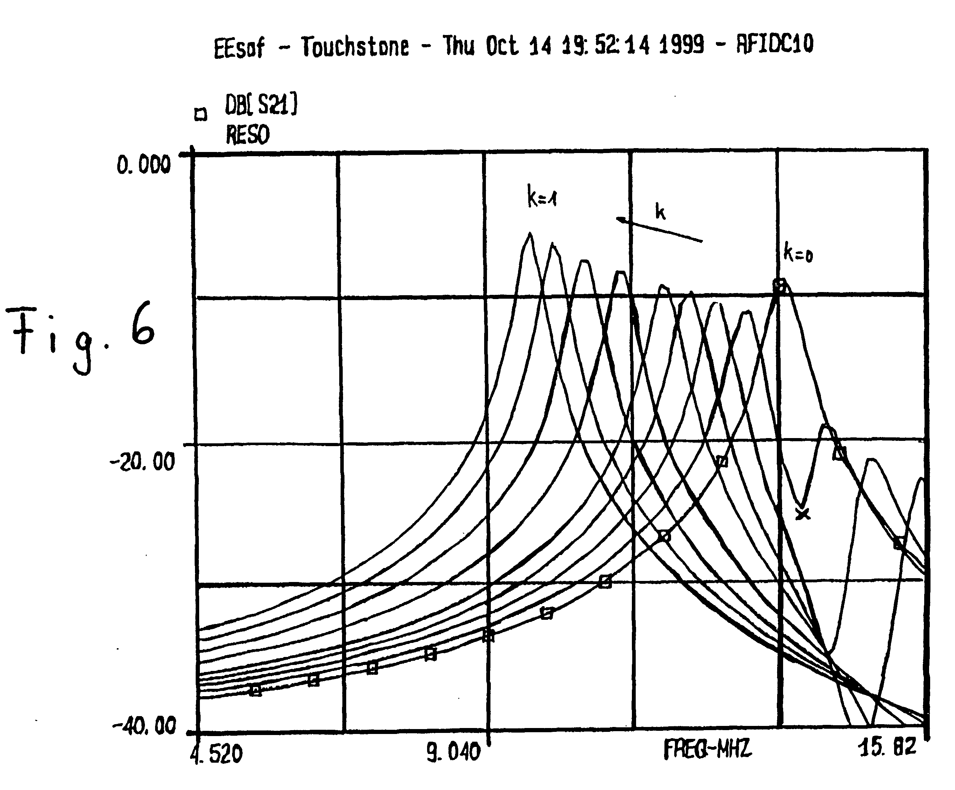

Fig. 5 und 6 veranschaulichen Simulationen dieses Vorgangs der unerwünschten Kopplung zwischen zwei benachbarten RFID-Etiketten mit gleicher und ungleicher Resonanzfrequenz.

Im ersten Beispiel (Fig. 5) ist der Frequenzgang für Transponder mit gleicher Resonanzfrequenz, dargestellt, wobei keine Kopplung (k=0) bei 13,56 MHz vorliegt und totale Kopplung (k=1) bei ca. 10 MHz vorliegt. Mit zunehmender Kopplung nimmt somit die sich ergebende Resonanzfrequenz zu niedrigeren Frequenzen ab.

Bei ungleicher Resonanzfrequenz gemäß dem in Fig. 6 dargestellten zweiten Beispiel liegt zwar wiederum bei 13,56 MHz keine Kopplung (k=0) vor und die Kopplung nimmt zu niedrigeren Frequenzen zu, wobei wiederum totale Kopplung (k=1) bei ca. 10 MHz vorliegt. Es hat sich nun aber kurz oberhalb von 13,56 MHz eine Nullstelle x gebildet, so daß es unter Umständen zu einem Ausfall des Chips kommen kann.

Zur Ausschaltung von zufällig auftretenden Störsignalen sind im Mikrowellenbereich arbeitende RFID-Systeme bekannt geworden, bei denen die Transponder mit mehreren Resonanzfrequenzen arbeiten. Dies ist bei einem in der US 5 446 447 beschriebenen RFID-System der Fall, um die Lesezeit herabzusetzen.

In der US 5 726 630 ist ein RFID-System beschrieben, das mit Frequenzen von beispielsweise 750 MHz und 1 GHz und somit im Fernbereich der Antenne arbeitet. Es kann aufgrund der Umgebungsbedingungen zu störenden Reflexionen und Nullstellen kommen. Um ein sicheres Transponderauslesesignal zu erhalten, werden Abfragesignale mit mindestens zwei Sendefrequenzen gleichzeitig verwendet, die im Empfangsbereich der Transponder liegen. Für den Betrieb des Systems macht es keinen Unterschied, ob ein oder mehrere Abfragesignale erkannt werden und zu Auslesesignalen führen.

Weiter sind RFID-Systeme mit Sendefrequenzen im Mikrowellenbereich eingesetzt worden, bei denen das Sendesignal mit einem Signal von z.B. 1 kHz moduliert wird und zusätzlich zur Resonanzfrequenz auch die zweite Harmonische des Transponders detektiert wird. Nach der Demodulation und Durchlaufen eines 1 kHz-Detektors können die empfangenen Transpondersignale dann sicher von Störsignalen unterscheiden'und so Fehlalarme vermieden werden. Problematisch bei diesen RFID-Systemen sind jedoch die Auswirkungen von Mehrweg- und Laufzeiteffekten.

Der Erfindung liegt die Aufgabe zugrunde, ein Verfahren zu schaffen, das einen zuverlässigen Betrieb, insbesondere Kommunikation und Speisung, ermöglicht, auch wenn sich mehrere Transponder in großer räumlicher Nähe befinden.

Diese Aufgabe ist erfindungsgemäß bei einem Verfahren mit den Merkmalen des Anspruchs 1 und bei einem System mit den Merkmalen des Anspruchs 6 gelöst. Vorteilhafte Weiterbildungen der Erfindung sind Gegenstand der abhängigen Ansprüche.

Bei dem erfindungsgemäßen Verfahren zum Auslesen und Beschreiben von RFID-Transpondern mit induktiver Kopplung unter Verwendung einer Schreib-/Lese-Einheit arbeiten somit die Transponder mit einer festen Resonanzfrequenz. Die Sendefrequenz wird von einer Sendegrundfrequenz entsprechend dieser Resonanzfrequenz für Betriebsbedingungen mit hoher Reichweite auf einen festgelegten alternativen Wert der Sendefrequenz für Betriebsbedingungen mit hoher Erkennungsrate bei gleichzeitig mehr als einem auszulesenden Transponder im Auslesefeld herabgesetzt, so daß eine sichere Kommunikation zwischen Transponder und Schreib-/Lese-Einheit gewährleistet wird.

Das erfindungsgemäße Verfahren eignet sich zum Einsatz im Bereich von ca. 10 kHz bis ca. 30 MHz. Vorzugsweise findet es Anwendung im Radiofrequenzbereich. Als Frequenzkombinationen werden vorzugsweise folgende Werte vorgesehen:

a) $f_R$ = 13,56 MHz;
$f_{S1}$ = 13,56 MHz, $f_{S2}$ = 6,78 MHz
b) $f_R$ = 27,125 MHz;
$f_{S1}$ = 27,125 MHz, $f_{S2}$ = 13,56 MHz, $f_{S3}$ = 6,78 MHz

Die Fertigungstoleranzen lassen die Transponder-Resonanzfrequenz etwa um $\pm$ 2 % variieren.

Durch das Vorsehen von zwei Betriebsfrequenzen ist es ermöglicht, zum einen Störungen durch sich in der Nähe befindende weitere Transponder auszuschalten oder jedenfalls weitgehend zu reduzieren und zum anderen mit der erforderlichen Reichweite zu arbeiten. Vorteilhaft sind die Schwingkreise der Transponder so abgeglichen, daß sie einzeln optimal auf der Sendegrundfrequenz arbeiten und dort auch die größte Reichweite haben.

Ist davon auszugehen, daß sich in der Nähe eines Transponders weitere Transponder befinden, deren Signale die Kommunikation stören könnten, wird die Betriebsfrequenz, d.h. die Sendefrequenz der Sender-/Lese-Einheit, etwa von 13,56 MHz auf den (oder einen) niedrigeren Wert 6,78 MHz herabgesetzt, der damit weiter von der Resonanzfrequenz 13,56 MHz des Tranponders fort liegt. Damit ist die Störwahrscheinlichkeit verringert und die Erkennungsrate ist erhöht, wie es für dicht gepackte RFID-Etiketten erforderlich ist. Es können somit bei abweichender Abfrage- und Resonanzfrequenz mit sicherer Erkennungsrate viele Transponder gleicher Resonanzfrequenz gleichzeitig im Lesefeld erfaßt werden. Die Senderreichweite ist bei herabgesetzter Sendefrequenz zwangsläufig geringer. Wird andererseits eine größere Reichweite (Erkennungsdistanz) des Senders benötigt und ist mit weniger Störungen zu rechnen, dann wird die höhere Sendefrequenz eingestellt. Das erfindungsgemäße Verfahren sieht es somit vor, dieselben Transponder abhängig von den Bedingungen vor Ort mit unterschiedlichen Sendegeräten zu betreiben.

So kann beispielsweise ein Schleusensystem am Ausgang einer Bibliothek, eines Lagers oder eines Verkaufgeschäfts mit der Grundfrequenz (z.B. 13,56 MHz) senden, denn an diesem Ort ist mit wenig Störungen durch andere Tranponder zu rechnen. Vielmehr kommt es hier auf eine größere Sendereichweite an.

Hingegen werden die Schreib-/Lese-Einheiten der Lager- und Verkaufsbewirtschaftung mit einer niedrigeren alternativen Sendefrequenz (z.B. 6,78 MHz) arbeiten, da hier die Reichweite nicht so wichtig ist, es vielmehr auf große Störungssicherheit ankommt.

Das erfindungsgemäße System zum Auslesen und Beschreiben von RFID-Transpondern, das sich insbesondere zur Durchführung des erfindungsgemäßen Verfahrens eignet, umfaßt einen auf einem Träger angeordneten Transponder mit einem Resonanzschwingkreis mit einer Resonanzfrequenz, eine Empfängereinrichtung und eine Schreib-/Lese-Einheit mit Sender/Empfänger, wobei der Resonanzschwingkreis eine feste Resonanzfrequenz hat, und der Sender/Empfänger der Schreib-/Lese-Einheit hat eine zur Grundsendefrequenz alternative niedrigere Sendefrequenz (Sendefrequenzen) entsprechend den Resonanzfrequenzen des Transponders.

Vielseitig einsetzbar sind dabei Sender mit mehreren einstellbaren Sendfrequenzen, beispielsweise 13,56 MHz und 6,78 MHz.

Bevorzugt findet das erfindungsgemäße System Anwendung bei sehr dünnen Etiketten, die in die unterschiedlichsten Waren eingebettet werden.

Das erfindungsgemäße Verfahren und System zum Auslesen und Beschreiben von RFID-Transpondern kann Anwendung finden als Ersatz für optische Barcode-Systeme (Retail, Logistik, Lagerbewirtschaftung); als Ersatz für SmartCards (Zahlkarten, Garantiekarten, Rabattkarten); als Mittel zur Identifikation (Bücher, Dokumente, Pässe, Tickets, Zertifikate); zur Absicherung des Urheberrechtsschutzes (Bilder, Kleider, Tonträger). Diese Aufzählung ist lediglich beispielhaft und keinesfalls vollständig. Beim Einsatz der RFID-Transponder ergeben sich gegenüber den herkömmlichen Systemen die großen Vorteile einer hohen Lesegeschwindigkeit und die Unabhängigkeit von der Positionierung, Witterung und des nicht auftretenden Verschleißes. Es können einer oder mehrere Transponder ausreichend mit Betriebsspannung versorgt werden, damit diese aktiv werden und durch Lastmodulation eine Rückantwort erzeugen können.

Diese Rückantwort wird synchron zum Trägersignal, jedoch auf ganzzahligem Verhältnis zu diesem gesendet, wobei der Takt im Transponderchip durch Teilung aus dem Sendersignal gewonnen wird. Bei einer Ausführungsform wird als Rückkanal ein amplitudenmodulierter Hilfsträger mit Frequenz $f_2/32$ verwendet, d. h. der Rückkanal ist auf $f_S = f_S \pm f_S/32$.

Die Erfindung wird im folgenden weiter anhand bevorzugter Ausführungsbeispiele und der Zeichnung beschrieben, wobei diese Darstellung lediglich zu Veranschaulichungszwecken dient und die Erfindung nicht auf die gezeigten Merkmalskombinationen einschränken soll. In der Zeichnung zeigen:

Fig. 1 ein Blockschaltbild einer erfindungsgemäßen Lese-Schreib-Schaltung,

Fig. 2 ein Beispiel für die Verwendung erfindungsgemäßer RFID-Etiketten in einem Bücherregal,

Fig. 3 ein Beispiel für die Verwendung erfindungsgemäßer RFID-Etiketten in einer Dokumentenablage,

Fig. 4 Ersatzschaltbilder von Sender/Empfänger und Transponderkreis zur Veranschaulichung der Kopplung zweier benachbarter Transponder,

Fig. 5 eine Veranschaulichung der Simulation des Vorgangs der unerwünschten Kopplung zwischen zwei benachbarten RFID-Etiketten mit gleicher Resonanzfrequenz und

Fig. 6 eine Veranschaulichung der Simulation des Vorgangs der unerwünschten Kopplung zwischen zwei benachbarten RFID-Etiketten mit ungleicher Resonanzfrequenz.

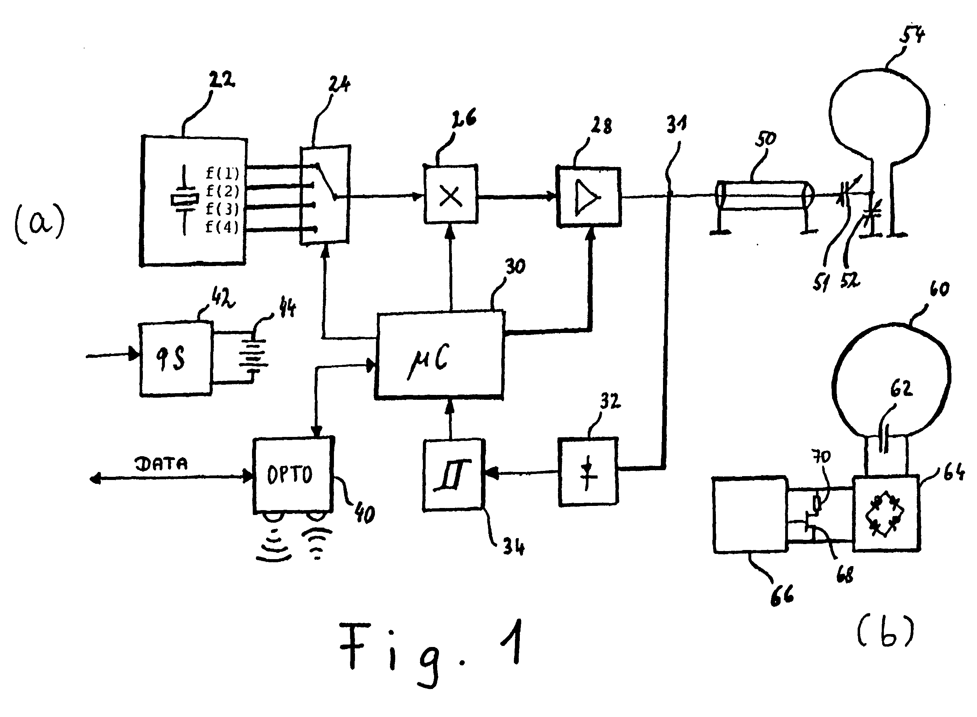

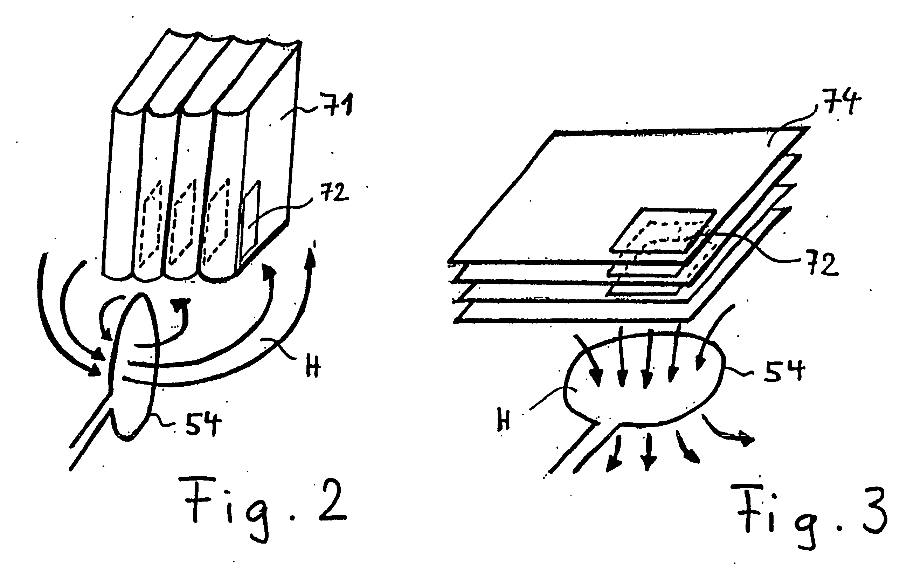

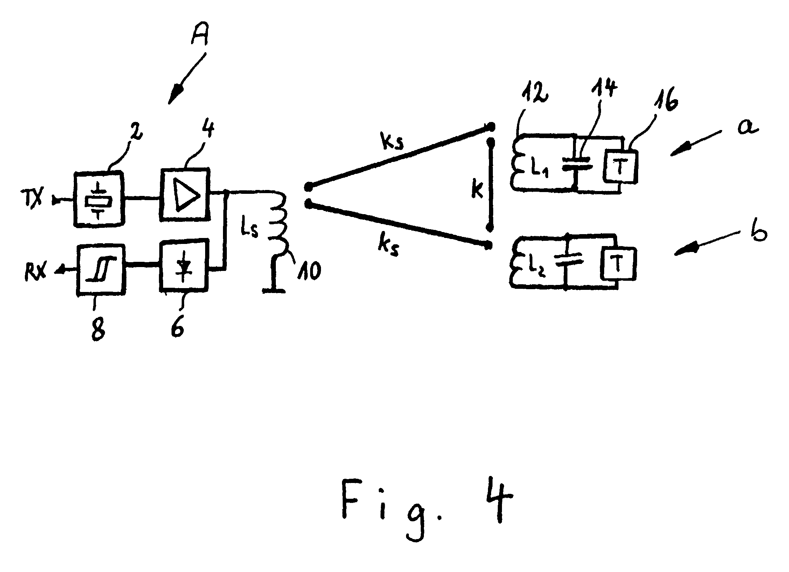

Im folgenden wird die Erfindung anhand eines Ausführungsbeispiels einer Lese-Schreib-Schaltung beschrieben, die in Fig. 1 dargestellt ist. Als erstes wird der Aufbau des Teils (a) der Schreib-/Lese-Einheit erläutert. Eine Spannungsversorgung 42 kann an das Versorgungsnetz angeschlossen sein oder alternativ über Batterie oder Akkumulator erfolgen. Im gezeigten Ausführungsbeispiel ist die Spannungsversorgung 42 an das Versörgungsnetz mit 230 V angeschlossen und die Versorgungsspannung kann am Ausgang 44 abgegriffen werden.

Der Senderzweig der Lese-Schreib-Schaltung umfaßt einen Oszillator (Quarzoszillator) 22 mit vier Ausgängen f(1), f(2), f(3), f(4) für vier Sendefrequenzen. Ein von einem Mikrokontroller 30 gesteuerter Auswahlschalter ist eingangsseitig jeweils mit einem ausgewählten der vier Ausgänge, hier dem Ausgang f(1) des Oszillators 22 verbunden und ausgangsseitig mit einem Modulator 26 verbunden. Im Modulator 26 werden die vom Oszillator 22 ausgegebenen Trägersignale mit den Sendekommandos und Daten moduliert. Ein Leistungsverstärker 28 ist mit dem Ausgang des Modulators 26 verbunden und ist mit dem Mikrokontroller 30 verbunden, der seine Ausgangsleistung steuert. Das im Leistungsverstärker 28 verstärkte Sendesignal wird über eine Leitung (Koaxialleitung mit 50 Ω Impedanz) 50 an eine Antennenanpaßschaltung gegeben, die zwei variable Kondensatoren 51, 52 umfaßt. Die Kondensatoren 51, 52 müssen eventuell entsprechend der Sendefrequenz nachgestimmt werden, um die benötigte Impedanztransformation durchführen zu können, wobei die Dimensionierung der Kapazitätswerte vorzugsweise über den Mikrokontroller 30 gesteuert wird. Das Sendesignal wird dann über eine Antenne 54 abgestrahlt.

Am Knotenpunkt 31 beginnt der Empfangszweig und hier wird die in die Antenne 54 induzierte Spannungsvariation abgegriffen. Ein Demodulator umfaßt einen Spitzenwertgleichrichter 32 und einen Schwellwertschalter 34 und ist mit dem Mikrokontroller 30 verbunden, der die demodulierten Signale aufbereitet. Mit dem Ausgang des Mikrokontrollers 30 ist ein Optointerface 40 verbunden. Es kann auch ein Datentransfer zu einem Steuer-Rechner vorgesehen sein, wobei über dieselbe Leitung auch Kommandos und Daten in den Mikrokontroller 30 eingegeben werden können, wie durch den Doppelpfeil (DATA) angedeutet ist.

In Fig. 1 ist weiter bei (b) der Teil der Transponderschaltung dargestellt. Diese umfaßt eine Antenne 60 mit Kondensator 62. Ein Vollwellengleichrichter 64 richtet die durch die Schreib-/Lese-Einheit, d.h. das von der Antenne 54 ausgestrahlte magnetische wechselfeld, induzierte Spannung gleich. Die von ihm ausgegebenen Signale werden dem Transponder-Chip 66 zugeführt. Wenn der Transponder 66 eine Meldung an die Schreib-/Lese-Einheit ausgibt, werden die zugehörigen Daten über einen parallel geschalteten Reihenkreis aus Feldeffekttransistor 68 und Widerstand 70 über einen Hilfsträger digital kodiert, indem der Widerstand 70 über den Feldeffekttransistor 68 ein- und ausgeschaltet wird.

Eine Schaltung gemäß Fig. 1 (a) kann beispielsweise sowohl für den Einsatz in einer Schleuse als auch in einem Lager oder Verkaufsraum vorgesehen werden. In der Schleuse, wo wenig Störungen durch benachbarte weitere Transponder zu befürchten sind, wird zur Erzielung einer höheren Reichweite des Sendesignals mit der Frequenz f(1) (nämlich im vorliegenden Fall mit 13,56 MHz) gearbeitet. Andererseits wird die Schaltung für ein Gerät in einem Verkaufsraum mit niedrigerer Frequenz f(2) (nämlich im vorliegenden Fall mit 6,78 MHz) betrieben, bei der sich die Felder nahe beieinander befindliche Transponder nicht stören.

In Fig. 2 ist ein Beispiel für die Anwendung des erfindungsgemäßen Verfahrens bei RFID-Etiketten für Bücher dargestellt. In beispielsweise die Einbanddeckeninnenseiten von Büchern 71, die auf einem nicht gezeigten Regal stehen, sind RFID-Etiketten 72 mit Resonanzfrequenz 13,56 MHz eingeklebt. Die RFID-Etiketten 72 sind aufgrund der einheitlichen Anbringungsweise mehr oder weniger ausgerichtet, so daß ihre Spulen im wesentlichen zur Deckung kommen und wie eine gemeinsame Spule wirken. Der Verlauf des Magnetfeldes und die Durchflutung der Sende- und Transponderantennen ist bei H veranschaulichte Bei einer Sendefrequenz von 13,56 MHz würde es zu erheblichen Störungen bis zum Ausfall der Transpondersignale kommen. Durch Einsatz eines Sendegeräts mit 6,78 MHz Sendegerät können die Transpondersignale sicher empfangen werden.

Ähnlich ist bei einem in Fig. 3 gezeigten Beispiel der Fall bei einer Dokumentenablage. Die RFID-Etiketten 72 mit Resonanzfrequenz 13,56 MHz sind jeweils auf einem Eckbereich eines Dokuments 74 angebracht und kommen ebenfalls zur Deckung, so daß sich bei einer Sendefrequenz von 13,56 MHz erhebliche Störungen ergeben würden (siehe auch Magnetfeld H). Auch hier wird vorteilhaft mit 6,78 MHz Sendefrequenz gearbeitet.

**Patentansprüche**

1. Verfahren zum Auslesen und Beschreiben von RFID-Transpondern (66) mit induktiver Kopplung unter Verwendung einer Schreib-/Lese-Einheit mit einer Sendefrequenz ($f_{S1}$), wobei die Transponder mit einer Resonanzfrequenz ($f_R$) arbeiten, **dadurch gekennzeichnet, daß** die Resonanzfrequenz ($f_R$) der Transponder (66) fest vorgegeben wird und für Betriebsbedingungen mit hoher Reichweite die Resonanzfrequenz ($f_R$) der Transponder als Sendegrundfrequenz ($f_{S1}$) gewählt wird und für Betriebsbedingungen mit hoher Erkennungsrate bei gleichzeitig mehr als einem auszulesenden Transponder im Auslesefeld die Sendefrequenz auf einen festgelegten alternativen Wert ($f_{S2}$) herabgesetzt wird, so daß eine sichere Kommunikation zwischen Transponder und Schreib-/Lese-Einheit gewährleistet wird.

2. Verfahren nach Anspruch 1, **dadurch gekennzeichnet, daß** als alternativer Wert der Sendefrequenz ($f_{S2}$) die Hälfte der Sendegrundfrequenz ($f_{S2}$ = $f_{S1}$/2) gewählt wird.

3. Verfahren nach Anspruch 1 oder 2, **dadurch gekennzeichnet, daß** mehrere alternative Sendefrequenzen unterhalb der Sendegrundfrequenz ($f_{S1}$) verwendet werden.

4. Verfahren nach einem der Ansprüche 1 bis 3, **dadurch gekennzeichnet, daß** die Resonanzfrequenz von 13,56 MHz und als Sendefrequenzen 13,56 MHz, und 6,78 MHz gewählt werden.

5. Verfahren nach einem der Ansprüche 1 bis 4, **dadurch gekennzeichnet, daß** die Resonanzfrequenz von 27,125 MHz und als Sendefrequenzen 27,125 MHz, 13,56 MHz und 6,78 MHz gewählt werden.

6. System zum Auslesen und Beschreiben von induktiv gekoppelten RFID-Transpondern mit einem Resonanzschwingkreis mit einer Resonanzfrequenz ($f_R$), zur Durchführung des Verfahrens nach einem der Ansprüche 1 bis 5, wobei das System auf einem Träger angeordnete Transponder (66) , eine Empfängereinrichtung und eine Schreib-/Lese-Einheit mit Sender/Empfänger und einer Sendefrequenz ($f_{S1}$) umfaßt, **dadurch gekennzeichnet, daß** der Resonanzschwingkreis eine feste Resonanzfrequenz ($f_R$) hat und der Sender/Empfänger der Schreib-/Lese-Einheit für Betriebsbedingungen mit hoher Reichweite eine Sendegrundfrequenz ($f_{S1}$)

gleich der Resonanzfrequenz ($f_R$) der Transponder (66) hat und auf eine festgelegte alternative niedrigere Sendefrequenz ($f_{S2}$) für Betriebsbedingungen mit hoher Erkennungsrate, bei gleichzeitig mehr als einem auszulesenden Transponder im Auslesefeld, einstellbar ist.

**7.** System nach Anspruch 6, **dadurch gekennzeichnet, daß** der Sender/Empfänger auf mehrere alternative niedrigere Sendefrequenzen (f(1), f(2), f(3), f(4)) einstellbar ist.

## Claims

**1.** Method for reading out and writing to RFID-transponders (66) with inductive coupling using a read/write unit with a transmission frequency ($f_{S1}$), wherein the transponders operate at a resonance frequency ($f_R$), **characterised in that** the resonance frequency ($f_R$) of the transponders (66) is fixedly predetermined and for operating conditions with a high range the resonance frequency ($f_R$) of the transponders is selected as the transmission basic frequency ($f_{S1}$) and for operating conditions with a high recognition rate with simultaneously more than one transponder to be read out in the read-out field the transmission frequency is reduced to a fixed alternative value ($f_{S2}$), so that reliable communication between the transponder and the read/write unit is guaranteed.

**2.** Method according to claim 1, **characterised in that** half of the transmission basic frequency ($f_{S2} = f_{S1}/2$) is selected as an alternative value of the transmission frequency ($f_{S2}$).

**3.** Method according to claim 1 or 2, **characterised in that** several alternative transmission frequencies below the transmission basic frequency ($f_{S1}$) are used.

**4.** Method according to any one of claims 1 to 3, **characterised in that** the resonance frequency of 13.56 MHz is selected and as transmission frequencies 13.56 MHz and 6.78 MHz are selected.

**5.** Method according to any one of claims 1 to 4, **characterised in that** the resonance frequency of 27.125 MHz is selected and as transmission frequencies 27.125 MHz, 13.56 MHz and 6.78 MHz are selected.

**6.** System for reading out and writing to inductively coupled RFID-transponders comprising a resonance circuit with a resonance frequency ($f_R$), for implementing the method according to any one of claims 1 to 5, wherein the system comprises transponders (66), which are disposed on a carrier, a receiving unit and a read/write unit with a transmitter/receiver and a transmission frequency ($f_{S1}$), **characterised in that** the resonance circuit has a fixed resonance frequency ($f_R$) and the transmitter/receiver of the read/write unit for operating conditions with a high range has a transmission basic frequency ($f_{S1}$) equal to the resonance frequency ($f_R$) of the transponders (66) and can be adjusted to a fixed alternative lower transmission frequency ($f_{S2}$) for operating conditions with a high recognition rate with simultaneously more than one transponder to be read out in the read-out field.

**7.** System according to claim 6, **characterised in that** the transmitter/receiver can be adjusted to several alternative lower transmission frequencies (f(1), f(2), f(3), f(4)).

## Revendications

**1.** Procédé pour la lecture et l'écriture de transpondeurs RFID (66) à couplage inductif, à l'aide d'une unité de lecture/écriture présentant une fréquence d'émission ($f_{S1}$), les transpondeurs travaillant avec une fréquence de résonance ($f_R$), **caractérisé par le fait qu'**on fixe la fréquence de résonance ($f_R$) des transpondeurs (66) et, dans des conditions de fonctionnement avec une portée élevée, on sélectionne la fréquence de résonance ($f_R$) des transpondeurs comme fréquence d'émission de base ($f_{S1}$) et, dans des conditions de fonctionnement avec un taux d'identification élevé, avec simultanément plus d'un transpondeur à lire dans la zone de lecture, on abaisse la fréquence d'émission à une valeur alternative ($f_{S2}$) prédéterminée telle, qu'une communication sûre entre le transpondeur et l'unité de lecture/écriture soit assurée.

**2.** Procédé selon la revendication 1, **caractérisé par le fait qu'**on sélectionne comme valeur alternative pour la fréquence d'émission ($f_{S2}$) la moitié de la fréquence d'émission de base ($f_{S2}=f_{S1}/2$).

**3.** Procédé selon la revendication 1 ou 2, **caractérisé par le fait qu'**on utilise plusieurs fréquences d'émission alternatives inférieure à la fréquence d'émission de base ($f_{S1}$).

**4.** Procédé selon une des revendications 1 à 3, **caractérisé par le fait qu'**on choisit la fréquence de résonance 13,56 MHz et comme fréquences d'émission 13,56 MHz et 6,78 MHz.

**5.** Procédé selon une des revendications 1 à 4, **caractérisé par le fait qu'**on choisit la fréquence de résonance 27,125 MHz et comme fréquences d'émission 27,125 MHz, 13,56 MHz et 6,78 MHz.

6. Système pour la lecture et l'écriture de transpondeurs RFID à couplage inductif, comportant un circuit oscillant résonant avec une fréquence de résonance ($f_R$) pour la mise en oeuvre du procédé selon les revendications 1 à 5, le système comprenant disposés sur un support, des transpondeurs (66), un dispositif de réception et une unité d'écriture/lecture avec un émetteur/récepteur et une fréquence d'émission ($f_{S1}$), **caractérisé par le fait que** le circuit oscillant résonant a une fréquence de résonance ($f_R$) fixe et l'émetteur/récepteur de l'unité d'écriture/lecture, dans des conditions de fonctionnement avec une portée élevée, a une fréquence d'émission de base ($f_{S1}$) identique à la fréquence de résonance ($f_R$) des transpondeurs et que, dans des conditions de fonctionnement avec un taux d'identification élevé avec simultanément plus d'un transpondeur à lire dans la zone de lecture, la fréquence d'émission peut être réglée à une fréquence d'émission alternative ($f_{S2}$) prédéterminée plus basse.

7. Système selon la revendication 6, **caractérisé par le fait que** l'émetteur/récepteur peut être réglé sur plusieurs fréquences d'émission alternatives (f(1), f(2), f(3), f(4)) plus basses.

Fig. 1

(a)

(b)

EP 1 224 607 B1

Fig. 3

Fig. 2

9

Fig. 4

EEsof – Touchstone – Wed Sep 22 11:35:42 1999 – RFIDC10

Fig. 5

EEsof – Touchstone – Thu Oct 14 19:52:14 1999 – RFIDC10

Fig. 6

EP 1 224 607 B1